# EUROPEAN PATENT APPLICATION

(11) **EP 1 552 956 A1**
(43) Date of publication of application: **13.07.2005**
(21) Application number: 04000263.6
(22) Date of filing: 08.01.2004
(51) Int. Cl.: B42D 15/00, B42D 15/10

(54) **Process for film application**

(71) Applicant: KBA-GIORI S.A., 1003 Lausanne (CH)
(72) Inventor: Schaede, Johannes Georg, 97074 Wurzburg (DE)
(74) Representative: Grosfillier, Philippe

(57) **Abstract**

The process comprises the following steps:
-) deposition of a glueing material on the substrate;
-) cutting of a window into the substrate and into the deposited glueing material;
-) application of a layer of material at least over the cut window and activation of the glueing material.

## Description

The present invention concerns a process for a film application on a substrate, such a paper substrate or similar substrate used for securities.

In the field of banknotes and securities, there has been increasing needs for safety features protecting against counterfeiting. Indeed, in the past years, computers, scanners and copy machines have been extensively developed and today, it is possible to buy very performant devices at a reasonable price. Since these devices are more performant, it has been at the same time necessary to develop new and improved safety features for securities, such as banknotes, checks, cards (i.e. credit cards), ID cards, passports etc. which would not allow them to be copied by standard computers or scanners, or even modern color copy machines.

Such safety features include special inks, so called optical variable inks (OVI), used to print specific patterns on the substrate of the note, optical variable devices (OVD) in the shape of metallized patches or holograms, or also specific patterns, such as moiré patterns and other similar patterns, all of which are very difficult if not impossible copy by actual devices, but, on the other hand, are easy to control visually.

Other safety means include combinations of superimposed lines and/or patterns with colors, which are only visible under specific conditions, for example UV light or by transparency. Again, the interest of such safety means is that they may easily be printed or placed on the document to be protected and also be controlled by simple devices, even visually, but they are impossible to reproduce with actual printers, scanners or copy machines.

Another specific technique involves watermarks in which the paper substrate is marked with lines or patterns only visible in transparency. A further development of this technique concerns pseudo-watermarks consisting in the creation of a window in the substrate, especially in paper-based substrates, which are normally not transparent, said window being transparent.

It is however very difficult to create or simulate a transparent window in a paper-based substrate. Transparent windows, as such, are widely used in polymer-based substrates for banknotes and securities, in order to provide a security element. These polymer-based substrates are usually completely transparent, therefore, to form a transparent window, it is only necessary to leave the chosen zone free of printing. However, in the case of paper, a substrate which is not transparent, a first process has been developed according to which, it is possible to reduce locally the thickness of the paper in order to create a transparent window in the substrate. PCT application WO 99/14433 for example, discloses this process and the content of this application is incorporated by reference in the present application. According to this known process, a soaking solution is applied on at least one surface of the paper in one or several predetermined zones, then one applies pressure and heat on the soaked zone so as to evaporate and densify the coated paper in said zone relative to the rest of the paper. Thus, said zones have a reduced thickness with respect to the rest of the paper and are transparent.

This first technique however has the drawback of weakening locally the paper in the zone comprising said window. In particular, the smaller the thickness of the window, the weaker the zone. Banknotes using such a technique thus have a reduced lifetime and must be exchanged, i.e. new bank notes must be printed to replace the older damaged ones.

Another technique implies to cut a hole directly in the paper in order to create the transparent window. For example, PCT application WO 95/10420, the content of which is incorporated by reference in the present application, discloses said other technique. It is of course necessary to cover the hole cut in the substrate, which is done in this case by covering the hole with a strip of transparent material, e.g. a foil or a laminate. This document specifically uses the contrast between the transparency of the window and a diffraction structure used as an additional security feature and placed inside the window. Modern copy machines and scanners are indeed unable to copy a diffraction structure and also a transparent window.

A known process for reinforcing a substrate is known from European patent application 02405782.0 filed on September 10, 2002 in the name of KBA-GIORI S.A., the content of which is enclosed by reference in the present application, in which a substrate having a zone of reduced thickness, for example a hole, comprises reinforcing means formed by a transparent polymer material, in particular a foil, covering said zone.

Another publication disclosing a security document comprising a window sealed off by an at least transparent foil is the international application WO 95/10420, incorporated herein by reference.

European patent application N° 02405368.8 filed on May 6, 2002 in the name of KBA-GIORI S.A. (will be published under the number 1 361 028 on November 12, 2003) discloses a mechanical machine for cutting openings, such as windows, in a substrate. The content of this application is incorporated by reference in the present application for its disclosure of the cutting machine and process used.

However, the known processes and devices have certain disadvantages.

For example, if the glueing material is present on the foil that is applied on the substrate, when a window is present in the substrate, the glueing material may then be transferred to other parts of the machine, which will then have to be cleaned.

It is therefore an aim of the present invention to improve the known processes and machines.

A further aim of the present invention is to provide a process in which a foil can be applied onto a substrate with a window in a safe and precise manner.

Another aim of the present invention is to provide a process in which

To this effect, the invention complies with the definition of the claims.

An advantage of the invention is that the cutting into the substrate and the predeposited glueing material will give perfect registration between window and glueing material.

Another advantage of the process according to the invention is the fact that the glueing material on the window edge prevents a peeling of the window edge.

A further advantage is that the layer of material, for example a laminate, carries no glueing material and for this reason will not stick to a thermo transfer tool in the window area.

The invention will be best understood with the description of an example of process and with reference to the accompanying drawings in which:
Figure 1 is a block-diagram of the process according to the invention;
Figure 2 is a schematical representation of the first step of the process according to the invention;
Figure 3 is schematical representation of the second step of the process according to the invention;
Figure 4 is schematical representation of the third step of the process according to the invention and
Figure 5 is a cross section of a substrate produced with the process according to the invention.

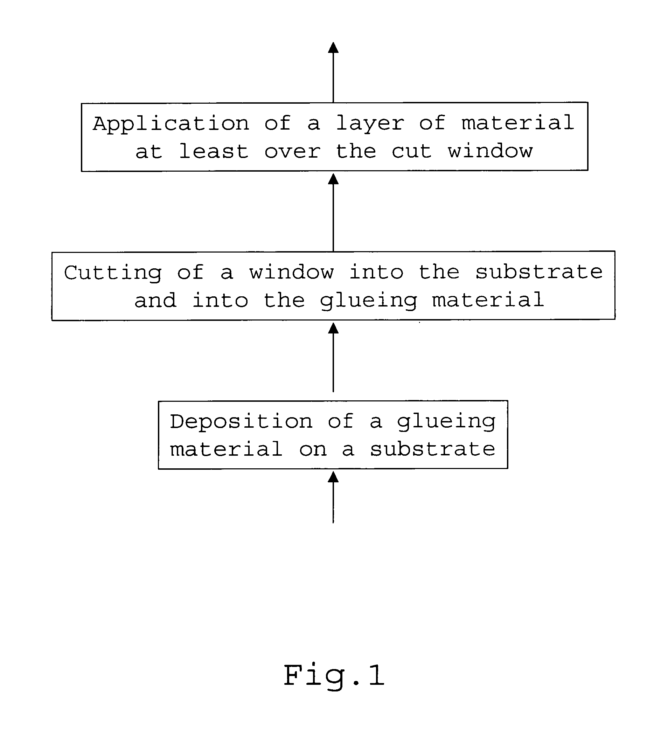

As shown in the figures, the process comprises the first step of deposition of a glueing material on the substrate 1 (see figure 1). The substrate may be a paper substrate, such as used to form securities, bank notes passports, checks or tickets and other similar products.

The substrate 1 may also be a polymer substrate such as a used for cards, credit cards, bankcards, or also a polymer substrate used for securities.

As one can readily understand, the substrate 1 is usually, but not limited thereto, a printed substrate.

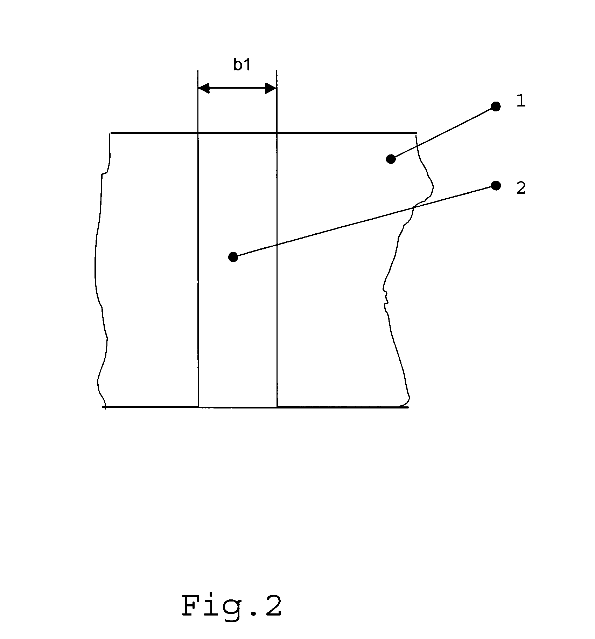

The glueing material, preferably a thermo transfer glue that is known in the art, is deposited as a strip 2 onto the substrate 1, as represented in figure 2. Many deposition processes known in the art can be used for the deposition of the glueing material, for example a screen deposition process.

The width b1 of the strip is defined by the width of the strip of material that will be glued to the substrate 1.

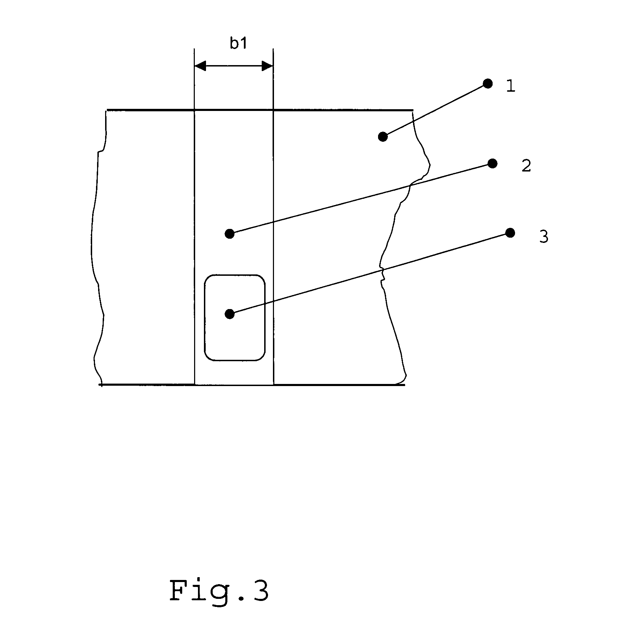

As a second step (see figures 1 and 3) a window 3 is cut into the substrate 1 and into the deposited strip of glueing material 2.

The cutting process can be a laser cutting process, as disclosed in EP application N°03009986.5 filed on May 2, 2003 in the name of KBA-GIORI S.A. or a mechanical cutting process as disclosed in EP application N° 02405368.8 mentioned above, both incorporated by reference in the present application for the sake of completeness of the widow cutting process.

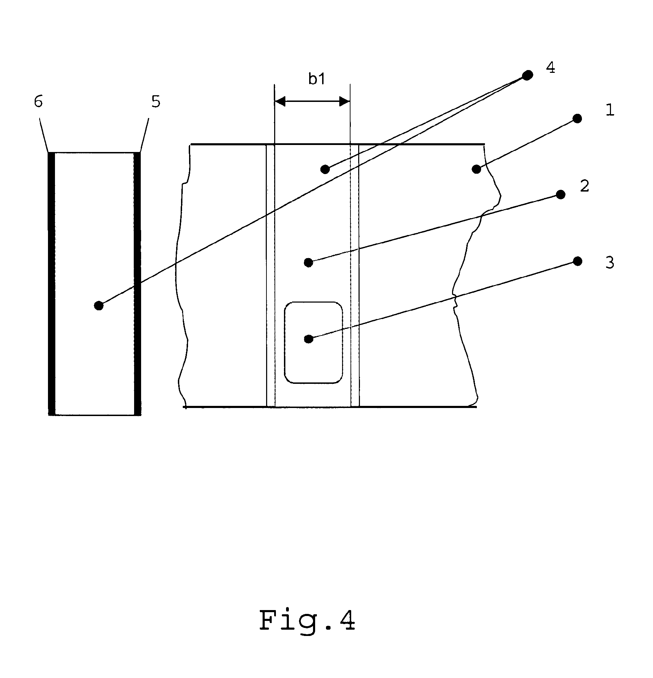

As a third step (see figures 1 and 4), the process comprises the application of a layer of material 4 at least over the cut window 3 and the activation of the glueing material.

Preferably, the layer of material 4 is a laminate strip. As shown in figure 4, the laminate strip preferably comprises two additional lateral strips of glueing material 5 and 6, made of thermo transfer glue, said lateral strips allowing to properly attach the lateral sides of the layer of material 4 to the substrate 1.

The activation of the glueing material can be made by different processes, which depend on the glueing material used. For example, one can use heat as an activating means with a thermo glue, or one could use a two component glue whereby the one component located on the layer of material 4 in the window would not be activated, or on could use an UV activated glue, or any other suitable glueing material with its activation process.

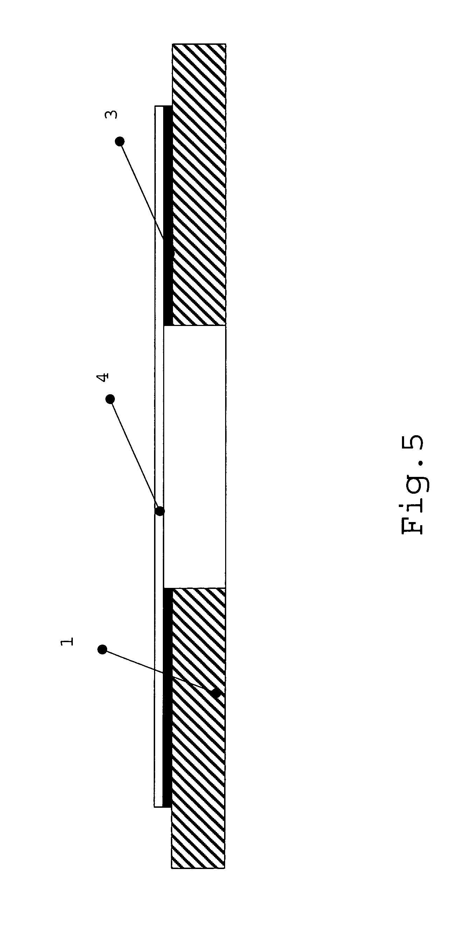

Figure 5 shows schematically a cross section of a substrate obtained by the process according to the invention with the substrate 1, for example a security, with a window 3 cut into the substrate and into a glueing material 3, covered by a layer of material 4, e.g. a laminate strip.

Of course, the present invention is not limited to the examples given but other equivalent designs are possible within the scope of protection. For example, the strip of material may have different shapes, such as a patch, a square or round strip or an elongated strip.

## Claims

1. Process for a film application on a substrate, such as a paper substrate or other similar substrate, comprising the following steps:
-) deposition of a glueing material on the substrate;
-) cutting of a window into the substrate and into the deposited glueing material;
-) application of a layer of material at least over the cut window and activation of the glueing material.

2. A process according to claim 1, in which the glueing material is a thermo transfer glue.

3. A process according to claim 1 or 2, in which said cutting step is carried out by a laser or a by a knife.

4. A process according to one of claims 1 to 3, in which said layer of material is a strip of laminate.

5. A process according to one of claims 1 to 4, in which said layer of material comprises at least one zone with a deposited glueing material.

6. A process according to one of claims 1 to 5, in which the activation of the glueing material is made by heat or by UV.

7. A process according to one of claims 1 to 6, in which said substrate is a paper substrate.

8. A process according to one of claims 1 to 6, in which said substrate is a polymer substrate.

9. A process according to claim 7 or 8, in which the substrate is a printed substrate.
